# EUROPEAN PATENT SPECIFICATION

(11) **EP 3 314 143 B1**
(45) Date of publication and mention of the grant of the patent: **14.08.2019**
(21) Application number: 16735572.6
(22) Date of filing: 22.06.2016
(51) Int. Cl.: F16F 1/393, F16F 1/54, B63H 21/30

(54) **MODULAR BELL-SHAPED VIBRATION-DAMPING MOUNT**
MODULARE GLOCKENFÖRMIGE SCHWINGUNGSDÄMPFENDE HALTERUNG
MONTURE AMORTISSANT DES VIBRATIONS EN FORME DE CLOCHE MODULAIRE

(30) Priority: 25.06.2015 IT UB20151661; 23.05.2016 IT UB201612831 U
(43) Date of publication of application: 02.05.2018
(73) Proprietor: Soleco Engineering S.r.l., 20128 Milano (IT)
(72) Inventor: VEZZO, Giacomo, 20128 Milano (IT)
(74) Representative: Lecce, Giovanni
(86) International application number: PCT/EP2016/001062
(87) International publication number: WO 2016/206803

(56) References cited:
- DE-C- 937 860
- GB-A- 706 558
- NL-C2- 1 013 421
- US-B1- 6 910 671
- WESSELO J H: "VAKANTIELEERGANG: TRILLINGSVRIJE OPSTELLING VAN WERKTUIGEN EN APPARATEN//III. TRILLINGSVRIJE OPSTELLINGEN AAN BOORD VAN SCHEPEN", INGENIEUR, KIVI. DEN HAAG, NL, vol. 71, no. 7, 13 February 1959 (1959-02-13), pages 37-45, XP001013990, ISSN: 0020-1146

## Description

This invention relates to a modular bell-shaped vibration-damping mount.

More particularly, this invention relates to a bell-type vibration damping and tear resistant mount in which the various components are assembled together in a mechanical way, avoiding the vulcanisation process to bind the elastic element to one or both of the upper and lower metal bodies between which it is arranged.

As is known, there are various types of vibration-damping mounts, typically used for the isolation/damping of mechanical vibrations and for the abatement of structural noise caused by the movement of parts of machines, apparatuses and systems, both static and mobile. In addition to being annoying and harmful for workers operating in the vicinity of such machines, vibrations adversely affect the life of their mechanical parts and may also affect the proper functioning of electronic control instruments installed in the immediate vicinity. The use of vibration-damping mounts regards, for example, machines such as conditioners and ventilation units, pumps, refrigeration and generation units, motor pumps, and also extends to the automotive industry. Such mounts, made in multiple shapes and sizes and for different loads, can be equipped with one or more helical springs or with one or more elastic elements, formed in thermoplastic elastomer, rubber or constituted by neoprene-based blends of different hardness as a function the specific application of the mounts themselves.

Bell-shaped vibration-damping mounts traditionally comprise a lower metal body, or base, and an upper metal body, or cap; between these two bodies is arranged the elastic element, which is permanently bound to them or to only one of them, by means of the vulcanisation process. A bushing, inserted from below in the mount thus formed, is fixed with its end shaped to the cover with mechanical interference, for example by chamfering, thus stabilising the various components to each other.

However, the known solutions of bell-shaped mounts present some drawbacks, which derive primarily from definitive fastening by means of vulcanisation of the elastic element to the lower and upper metal bodies, or to at least to one of them. This traditional constructive setting of the bell-shaped mount, which is known for example from Patent GB 706 558, translates into the need to realise an extremely wide assortment of finished mounts, as a function of the elastic element to be coupled to the metal bodies, which can be requested with hardness alternately different and typically of 45, 60 or 70 shore.

Another element to consider refers to the fact that sometimes the metal bodies require particular non-standard alloys and/or to the elastic element requires a specific blend, for example antibacterial if the mounts are used in the food sector, or resistance to chemicals if they are installed in environments with polluted air or in areas with a high concentration of saline fog. All these constraints inevitably determine the need to produce and stock large quantities of finished product, i.e., of mounts with elastic elements vulcanised to the metal parts and different from each other in terms of hardness, type of elastic element used and material required for the metal parts forming the base and cover. It is obvious that this customisation of vibration-damping mounts involves high costs for both production and storage, without considering the further drawback deriving from the different sizes/shapes of the mounts themselves.

A further drawback of traditional vibration-damping mounts in question concerns the fact that the connection bushing, inserted into them from below, is sometimes not able to provide adequate anti-tear guarantees, in the sense that it can detach or come loose from the upper body or cover to which it is connected only by chamfering, due to the constant stress and weight to each individual mount is subjected. These negative conditions occur, for example on vibration-damping mounts of systems or devices that are installed on ships and water-craft in general, which are notoriously subject to very high stresses in adverse weather conditions, and therefore receive violent thrusts upwards. The same can also occur in basically static situations, in the case of violent settling or partial subsidence of the floor that supports the various devices or apparatuses; also in this eventuality, the vibration-damping mounts receive a strong thrust that can detach the bushing, causing a functional alteration of the mounts themselves and the need for fast and cosdy service to replace them.

A further drawback of the known vibration-damping mounts in question is connected with the impossibility of replacing the elastic elements of which there are provided, if they have suffered significant deterioration or where, after a certain period, they are found to be inadequate in terms of shock-absorbing effect or for other reasons. In these cases, since the elastic element is vulcanised on the upper and lower bodies or on at least one of them, the possibility of changing the element itself is practically impossible and thus requires the complete replacement of the entire vibration-damping mount, or at least of one of the upper or lower bodies to which said elastic element is integral, with inevitable overall increase in costs.

Vibration-damping mounts for marine use are known from the paper published in the Dutch journal "De Ingenieur" by J.H. Wesselo in 1959 that, however require a bond by vulcanisation between the rubber and metal components.

Dutch patent No. 1 013 421 regards, instead, a vibration-damping mount in which the connection between cover and bushing is made by tightening a nut and can only be made at the end of installation on the machine to ensure the solidity of the coupling; in fact, all the connection pins are coupled by threading, with the consequence that, in the loose (not assembled) mount, the connection member can rotate with respect to the cover.

Therefore, also in this case, the cover of the vibration damper must necessarily be vulcanised to the base to ensure that the vibration damper stays together.

The purpose of this invention is to overcome the drawbacks listed above.

More particularly, the purpose of this invention is to provide a modular bell-shaped vibration-damping mount whose components can be selected and assembled with each other as necessary in a mechanical way, avoiding any vulcanisation or equivalent process to make the elastic element irreversibly integral to one or both of the metal bodies of the mount itself.

A further purpose of the invention is to provide a modular bell-shaped vibration-damping mount in which the means that connect the various elements are precisely and stably fixed to the upper/lower body, without the risk of loosening or detaching from them.

Another purpose of the invention is to provide a modular bell-shaped vibration-damping mount able to provide precise anti-tear guarantees even in particularly demanding and critical conditions of use.

A further purpose of the invention is to provide a modular bell-shaped n vibration-damping mount suitable to allow, if necessary, quickly replacing the elastic element initially selected with another having different functional characteristics.

A further purpose of the invention is to make available to users a modular bell-shaped vibration-damping mount suitable to provide high durability and reliability over time and also such as to be easily and economically constructed.

These and still other purposes are achieved by the modular bell-shaped vibration-damping mount of this invention according to the main claim.

The constructive and functional characteristics of the modular bell-shaped vibration-damping mount of this invention will be better understood from the detailed description that follows, in which reference is made to the accompanying drawings that illustrate a preferred, and not limiting, embodiment and in which:
Figure 1 schematically represents, in perspective view from above, the modular bell-shaped vibration-damping mount of this invention;
Figure 2 schematically represents the same vibration-damping mount in cross-section;
Figure 3 is an exploded schematic view of the same vibration-damping mount;
Figure 4a schematically represents a side view of the same vibration-damping mount;
Figure 4b is a plan view of the vibration-damping mount according to the preceding figure;
Figure 5 schematically represents the cross section of the modular bell-shaped vibration-damping mount of the invention according to an alternative embodiment, concerning the bond of the connection bushing to the lower body;
Figure 6 is a schematic view of the vibration-damping mount according to Figure 5;
Figure 7 schematically represents the cross section of the vibration-damping mount of this invention according to an alternative embodiment;
Figure 8 schematically represents a plan view of the vibration-damping mount according to Figure 7;
Figure 9 is an exploded schematic view of the vibration-damping mount according to Figure 7;
Figure 10 schematically represents a plan view of the vibration-damping mount of the invention with cover.

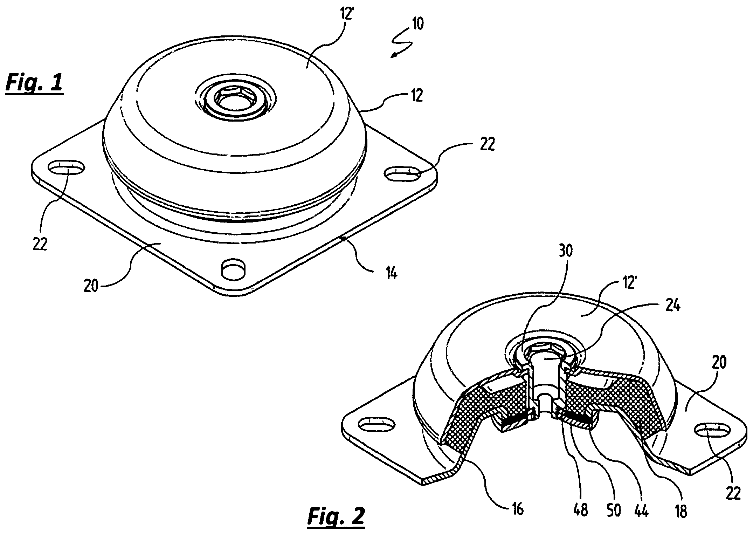

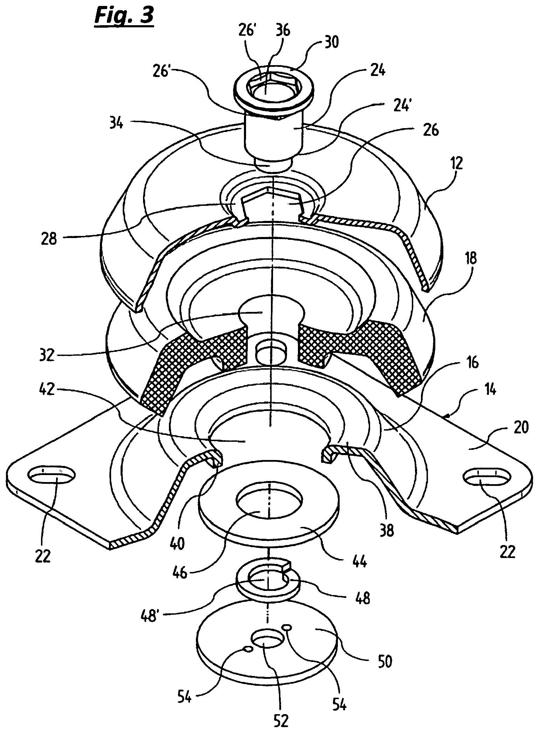

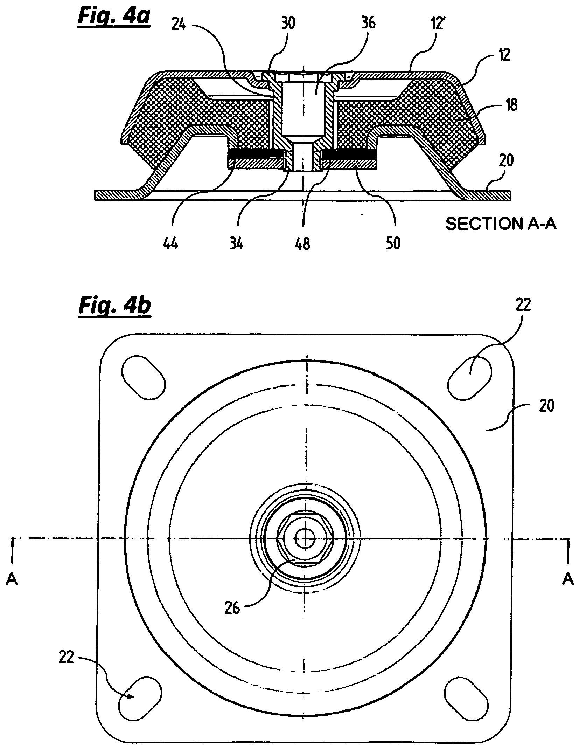

With reference to Figures 1 to 3, 4a and 4b, the modular bell-shaped vibration-damping mount of this invention, indicated as a whole by 10 in Figure 1, comprises an upper body or cover 12, by way of example with circular plan and internal concavity, and a lower body or base 14, which comprises an externally convex part 16 likewise with circular plan; around said part 16 of the base 14, there develops an integral flat frame 20, provided with circular or slotted holes 22 to allow the fastening of the mount 10 to a support surface. Between the cover 12 and the base 14 is arranged an elastic element 18, typically made of natural or nitrile rubber, that in the preferred embodiment shown in the figures, has a substantially frustoconical conformation and is shaped in a complementary way to the surfaces defined by the inside face of the cover 12 and by the convex surface 16 of the base 14. The element 18, as well as the upper 12 and lower 14 bodies, is centrally provided with a through hole, intended for housing a bushing 24, which will be described later; the central hole made on the upper body 12 is recessed with respect to the upper face 12' of the cover 12 and is indicated with 26 in Figure 3; said hole 26 has a polygonal shape, typically hexagonal.

According to the invention, around the recessed hole 26 of the upper body 12 is realised a flat annular portion 28, along which abuts a collar 30 formed at the upper end of the bushing 24; the latter is inserted from above into the hole 26, is aligned to the face 12' of the body 12 and extends in the underlying elastic element 18 along a central hole 32 with which it is provided. The lower end of the bushing 24 has a portion 34 with a smaller diameter with respect to the overlying body, to form an annular recess 24' (as shown in Figure 3); said portion 34 is provided with outer thread. The axial hole 36 formed in the bushing itself is intended to receive a conventional screw for fixing the vibration-damping mount 10 to the machine or apparatus to which it is intended. Below the collar 30 of the bush 24, there is formed an integral hexagonal crown 26', or otherwise of polygonal shape complementary to the hole 26 of the cover 12, to accomplish realise the mechanical bond between the bush itself and said cover.

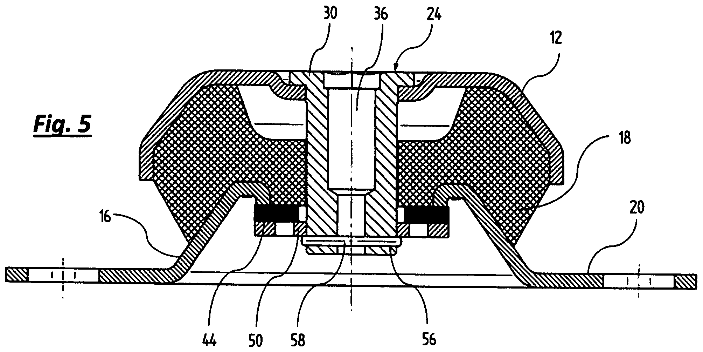

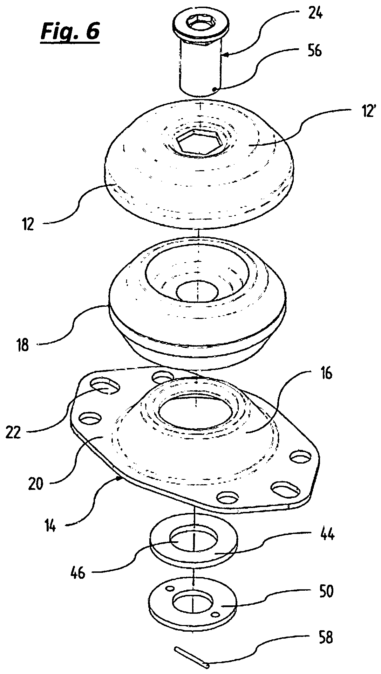

The externally convex part 16 of the base 14 defines a frustoconical development that, at the upper end, extends in an annular crown 38 of flat development, bent downward substantially at 90° in correspondence of the end facing the longitudinal axis of the mount 10. This bend forms a circumferential lip 40 that delimits the central hole, indicated with 42, of said base 14; the hole 42 is axially aligned with the hole 32 of the elastic element 18 and with the hole 26 of the cover 12. As can be seen in particular from Figures 2, 3 and 4a, the circumferential lip 40 formed along the base 14 around the hole 42 constitutes a shoulder or abutment for the area of greater diameter of a washer 44, made of rubber or elastomeric material, provided with a central hole 46 within which is arranged an spring washer 48. The spring washer 48, with a central hole 48', abuts in correspondence and circumferentially delimits the annual recess 24' of the bushing 24. To the lower face of the washer 44 made of rubber or elastomeric material is coupled a disc-like metal element 50, which also covers the spring washer 48 and has a central threaded hole 52. Through such threaded hole 52, the disc-like element 50 is screwed to the bushing 24 in correspondence of its portion 34 of smaller diameter, projecting from the hole 48' of the spring washer 48. The tightening of the disc-like element on said portion 34 is preferably realised with a conventional pin spanner, starting from the two holes indicated with 54 present on the disc-like element itself. Such tightening is obviously preceded by the operations that lead the upper 12 and lower 14 bodies to overlap each other, delimiting the elastic element 18 arranged between them, and the bushing 24 to be inserted in the holes 26, 32, 46. Said bushing is likewise previously chamfered on the cover 12, in correspondence of the hexagonal hole 26 of the cover 12 in which is forced the hexagonal crown 26' realised under the collar 30 of the bushing itself and visible in Figure 3. The result of the assembly of the cited components gives rise to a vibration-damping mount 10 in which the elastic element 18 is stably coupled to the upper 12 and lower 14 bodies, while not being vulcanised state on them; the bushing 24 is inserted from above into the mount 10, in the same direction of the load and abuts the flat annular portion 28 of the cover 12 on one side and, on the opposite side, the lip 40 of the base 14 by means of the disc-like element 50 to which it is screwed with its end 34 of smaller diameter. This mechanical anchorage between the upper 12 and lower 14 bodies also allows, by virtue of the disc-like element 50 that performs the function of anti-tear plate, to provide resistance to tensile loads. The washer 44 made of rubber or elastomeric material acts instead as an isolating shock-absorber between the metal parts constituted by the disc-like element 50 and the lip 40 of the base 14, while the elastic washer 48 prevents the possible unscrewing of the end 34 of the bushing 24 from the threaded hole 52 of which the same disc-like element is provided. The bond between said upper 12 and lower 14 bodies can, in any case, be realised using tie rods of any kind, cooperating and fixed in any way to the disc-like element 50 or to an equivalent member. In this regard, Figures 5 and 6 illustrate, by way of example, the same mount 10 in which, according to an alternative embodiment, the bushing 24 is made integral to the disc-like element 50 with different means with respect to engagement by threading described above. In this case, the lower end of said bushing does not present a reduction of the diameter and, in place of the threaded portion 34, is provided with a transversally extended through hole 56 in which is inserted and forced a pin 58 or equivalent, as in Figures 5 and 6. In this case, in the absence of threading at the lower end 34 of the bushing 24 and on the disc-like body 50, the spring washer 48 is eliminated.

After assembly, the part or lower end provided with hole 56 of the bushing 24 protrudes downward from the disc-like element 50 and therefore allows the easy forced insertion of the pin 58 in the same hole 56, so as to realise the stable coupling, even if removable if necessary, of the upper 12 and lower 14 bodies with the elastic element 18 arranged between them. Even this alternative embodiment ensures adequate tear resistance, by virtue of the pin 58 that extends transversely below the disc-like element 50.

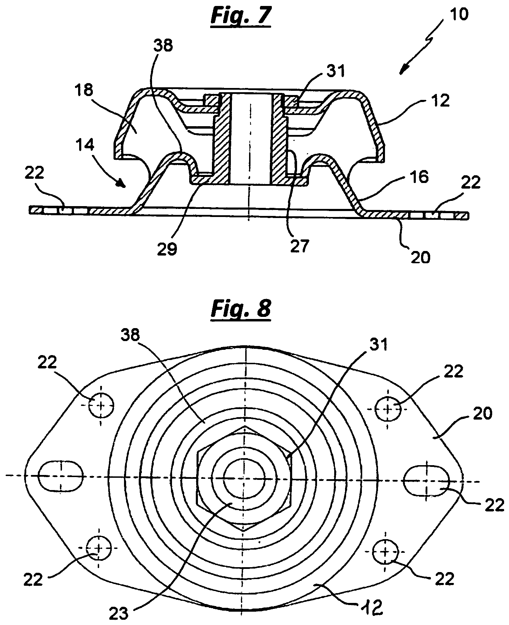

According to a preferred and alternative embodiment illustrated in Figures 7, 8 and 9, in the vibration-damping mount of this invention the assembly constituted by the bushing and the washer coupled to it is designed to avoid possible problems of tensile strength, which in certain circumstances may instead occur in the previous embodiment.

In accordance with this alternative embodiment, the conformation of the elastic element arranged between the upper and lower bodies further guarantees a balanced distribution of the load by means of compression and shear stresses, consequently resulting in benefits in terms of efficiency of isolation.

Therefore, with reference to Figures 7 to 9 in which the same numeric references are used as in the previous solution in terms of components or common and identical parts, the modular bell-shaped mount is indicated therein with 10' and comprises an upper body or cover 12, by way of example with circular plan, a lower body or base 14 with an externally convex-conical area 16 likewise of circular plan and delimited by an integral flat quadrangular frame 20 provided with slotted holes 22 for the fixing of the mount 10 in a support surface.

Between the cover 12 and the base 14, the elastic element is arranged, here indicated with 18' and provided with a central through hole 19.

Said elastic element 18' presents a substantially frustoconical conformation in central-upper half-part indicated with 21, where it is shaped in a complementary way to the surface defined by the inner face of the cover 12. Also the cover 12 and the base 14 comprise a central through hole; said holes are respectively indicated with 26 and with 42. The hole 26 of the cover 12 is of polygonal shape, while the hole 42 of the base 14 is delimited by a circumferential lip 40, similarly to the previously described solution, formed by bending at 90° downward towards an extended annular ring around the hole itself.

In accordance with this alternative embodiment, a bushing 23 with axial hole 23' is inserted from below into the hole 42 of the base 14, passes through the hole 19 of the elastic element 18' and the hole 26 of the cover 12, from which protrudes with the upper end defined by a threaded portion 25 of smaller diameter with respect to the cylindrical body, or stem, indicated with 27. The opposite lower end of the bushing 23 bears a solid plate 29, having a diameter greater than that of the circumferential lip 40 which delimits the hole 42 of the base 14. The plate 29 is made in a single body with the bushing 23, i.e., with its parts 27 or stem of greater diameter and 25 of smaller diameter with thread. A hexagonal nut 31 is provided to be screwed to the upper threaded end 25, protruding from the cover 12 of the bush 23.

In order to ensure a balanced distribution of stresses in the two components of compression and shear, the lower half-part of the elastic element 18', which remains exposed between the cover 12 and the base 16, defines a concave profile band 33; this concavity extends circumferentially and, in the example of an elastic element having a maximum diameter of between 80 and 100 mm, is preferably between 7.0 and 9.0 mm. This is functional for an optimal distribution of the load, avoiding unwanted concentrations of tensions in localised portions, which would cause a stiffening of the elastic element 18'.

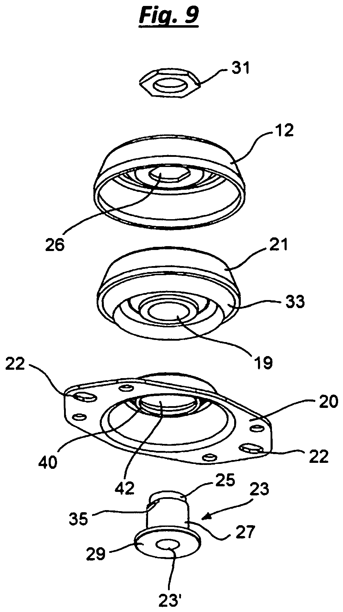

The assembly of the mount of this invention, preceded by the operations that bring the upper 12 and lower 14 bodies to overlap each other and delimit the elastic element 18 arranged between them, provides that the bushing 23 is inserted from below, starting from the hole 42 of the lower body 14, to extend in the holes 19 of the elastic element 18 and 26 of the cover 12 to protrude from the upper face of the latter with its threaded section 25. On this latter is then screwed the hexagonal nut 31, which realises the coupling between the bush 23 and the cover and, at the same time, mechanically binds between them the cover itself, the elastic element 18 and the lower body without any vulcanisation intervention. In this phase, the plate 29, made in a single body with the bushing 23 at its lower end, abuts the circumferential lip 40 that delimits the hole 42 of the base 14 and thus allows the tightening of the hexagonal nut 31 on the cover 12. During the same step, the bush 23 is inserted with the end area of its stem 27 of greater diameter, placed close to the threaded portion 25, in the polygonal hole 26 of the cover 12; on said end of the stem 27 are realised at least two opposing facets 35 (one of which is visible in Figure 9), which interlockingly engage with corresponding facets of said polygonal hole 26 and therefore prevent rotation of the bushing 23 with respect to the cover 12 during tightening of the hexagonal nut 31 on the upper threaded end 25, protruding from the cover 12, of the bushing 23.

Incidentally, the plate 29 of the bush 23, in the conditions in which the vibration-damping mount 10' is loaded, remains spaced from the circumferential lip 40 due to deflection of the elastic element 18'. The metal-to-metal contact between the plate 29 of the bushing 23 and the circumferential lip 40 occurs only when the vibration-damping mount 10' is subjected to tensile stress, in which it is necessary to ensure its structural integrity and prevent slippage/tearing of the bush 23 rather than ensuring effective vibration isolation.

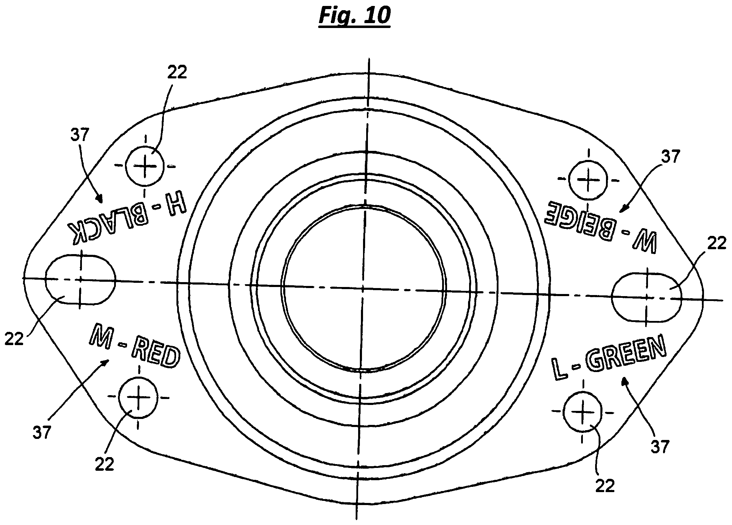

According to a further advantageous characteristic of the invention, illustrated in Figure 10, which represents a plan view of the mount without cover or upper body 12, the flat frame 20 of the vibration-damping mount 10 or 10' is provided along the periphery with alphabetic or possibly alphanumeric references, indicated with 39, suitable to define as many identification codes, preferably of the producer of the vibration-damping mounts according to the invention. Said codes, consisting, by way of example, of the alphabetic letters L, W, M, and H, are related to the hardness of the elastomer according to Shore A (reference to the ISO 868/DIN 53505 and ASTM D 2240 standards). The cited alphabetic letters are combined with words that identify a particular colour, such as L - GREEN, M - RED, W - BEIGE and H - BLACK. Given that the elastic elements 18, 18' are correspondingly coloured, with a simple visual control it is possible to immediately and certainly identify the hardness of the element combined with the vibration-damping mount 10 or 10' for its possible replacement. Such codes and words are preferably etched by stamping on the frame 20 near the holes 22, and the possibility is not excluded that such information could be applied by painting or labels of any kind and material.

As can be seen from the foregoing, the advantages achieved by the invention are clear.

The vibration-damping mount of this invention has characteristics of great versatility, being able to be assembled without prior fixing by vulcanisation of the elastic element 18 or 18' to the upper 12 and/or lower 14 metal bodies; in this way, the mount is easily and quickly customisable based on the various customer needs and it is therefore not necessary to stock the entire assortment of products, which is particularly onerous, also due to the costs of procuring the materials.

This solution also allows overcoming the problems that sometimes occur during production, determined by the difficulty of vulcanising the elastic element due to the particular mix required and/or due to the obligatory use of particular metals for realising the cover 12 and the base 14; the latter, in its peripheral part forming the frame 20 may can have any conformation and a variable number of slotted holes 22; for example, with respect to Figures 1, 2 and 3, in which said frame is square and provides for four slotted holes 22, in figure 6 said frame presents a substantially octagonal shape with six holes some of which slotted 22 and in part round.

In addition to the advantageous characteristics listed above, in the modular bell-shaped vibration-damping mount of this invention, the elastic element 18,18' is easily replaceable at any time since, in all the preferred embodiments described above, the vibration-damping mount in its entirety can be quickly and easily disassembled; this because said elastic elements 18,18' are not vulcanised on either the upper body or cover 12 or on the lower body or base 14 and can thus be replaced if necessary with another one having different characteristics of elasticity, resistance or with specific functional characteristics, after unscrewing the bushing 24 from the plate-shaped element 50, or, according to the embodiment of Figures 5 and 6, after sliding out the pin 50 from the hole 56 extending transversely to the lower end of the bushing itself, or again, in accordance with the solution in Figures 7 to 9, after unscrewing the hexagonal nut 31 from the upper threaded end 25,protruding from the cover 12, of the bush 23.

Furthermore, with reference to the alternative embodiment of Figures 7, 8 and 9, the bush 23 and the plate 29 realised integrally with it ensure in any working condition adequate resistance to tensile stresses, avoiding the danger of tearing. The presence of a concave profile band 33 along the area of the elastic element 18, which remains exposed between the cover 12 and the base 16, also ensures that, during the deformation process of the same elastic member, compression and shear stresses are developed simultaneously and in an adequately balanced way, so as to exploit said elastic element 18 in its entirety and in an optimal manner. In this respect, we further emphasise the benefit of the possible presence, along the flat frame 20, of engravings or words that allow the immediate identification of the hardness of the elastic element 18 of each vibration-damping mount 10 or 10'.

Although the invention has been described with reference to several embodiments, provided by way of non-limiting example, many modifications and variations will be apparent to a person skilled in the art in light of the above description. Therefore, this invention intends to embrace all the modifications and variants falling within the scope of the following claims.

## Claims

1. A modular bell-shaped vibration-damping mount (10), (10'), comprising:
- a circular-plan upper body or cover (12), internally concave;
- a circular-plan lower body or base (14) with an externally convex-conical area (16) and provided with an integral flat frame (20) with holes (22) some of which slotted;
- said bodies (12) and (14) being respectively provided with a central through hole (26), (42),
- an elastic element (18), (18') with a central through hole (32) or (19);
- and a bushing (23) or (24) with axial hole (23') or (36),
**characterised in that** said central through hole (26) of the body (12) defines a polygonal shape suitable to engage a hexagonal crown (26') of the bushing (24) or one or more facets (35) of the bushing (23), said bushings alternately connecting between them in a mechanical way the cover (12) and the base (14) with each other and on the elastic element (18) or (18') interposed between them, the central through hole (42) of the lower body (14) being delimited by a circumferential lip (40) formed on an annular crown (38) present at the top of the convex part (16) of the base (14) and bent downwards, substantially at 90°.

2. The vibration-damping mount according to claim 1, **characterised in that** said bushing (23) comprises at the upper end a threaded portion (25) with a diameter smaller with respect to the underlying cylindrical body or stem (27) of the same bushing that, at the opposite lower end, shows an integral plate (29) having a greater diameter with respect to that of the lip (40) defining the central through hole (42) of the lower body (14).

3. The vibration-damping mount according to claims 1 and 2, **characterised in that** said bushing (23) is inserted from below in the hole (42) of the base (14), passes through the hole (19) of the elastic element (18') and the hole (26) of the cover (12) projecting from it with the threaded portion (25) on which is screwed a hexagonal nut (31) that realises the coupling between the bushing (23) and said lid and, at the same time, stably mechanically binds the cover itself, the elastic element (18') and the lower body(14) to each other.

4. The vibration-damping mount according to claim 1, **characterised in that** said bushing (24) is provided with an upper end collar (30), while the opposite lower end of the same bushing (24) defines a portion (34) with a smaller diameter, provided with an outer thread and forming an annular lowering (24'), said portion (34) being screwed into the central hole (52) correspondingly threaded of disc-like element (50) that abuts against said circumferential lip (40) with interposition an insulating washer (44), said insulating washer (44) being provided with a central hole (46) in which is arranged a spring washer (48) with central hole (48').

5. The modular bell-shaped vibration-damping mount according to claim 4, **characterised in that** the bushing (24) protrudes from the disc-like element (50) with its lower part on which is formed a transversally extended through hole (56) for the forced insertion of a pin (58) or equivalent.

6. The vibration-damping mount according to claim 3, **characterised in that** the elastic element (18') presents a substantially frustoconical conformation in the central-upper half-part (21), shaped in a complementary way to the surface defined by the inner face of the cover (12), while in the lower half-part that remains exposed between said cover and the base (16) said elastic element (18') defines a concave profile band (33).

7. The vibration-damping mount according to claim 1, **characterised in that** the flat frame (20) is provided, along the periphery and in proximity of said circular or slotted holes (22), of alphabetic or possibly alphanumeric references (39), suitable to define as many identification codes of the elastic elements (18), (18').

## Patentansprüche

1. Modulare glockenförmige schwingungsdämpfende Halterung (10), (10'), umfassend:
- einen von oben gesehen kreisrunden oberen Körper oder eine von oben gesehen kreisrunde Abdeckung (12), der bzw. die innen konkav ist;
- einen von oben gesehen kreisrunden unteren Körper oder ein von oben gesehen kreisrundes Unterteil (14) mit einem außen konvexkonischen Bereich (16) und versehen mit einem integralen ebenen Rahmen (20) mit Löchern (22), von denen einige schlitzförmig sind;
- wobei diese Körper (12) und (14) jeweils mit einem mittleren Durchgangsloch (26), (42) versehen sind,
- ein elastisches Element (18), (18') mit einem mittleren Durchgangsloch (32) oder (19);
- und eine Buchse (23) oder (24) mit axialem Loch (23') oder (36),
**dadurch gekennzeichnet, dass** das mittlere Durchgangsloch (26) des Körpers (12) eine vieleckige Form definiert, die geeignet ist, mit einer sechseckigen Krone (26') der Buchse (24) oder einer oder mehreren Facetten (35) der Buchse (23) in Eingriff zu sein, wobei die Buchsen die Abdeckung (12) und das Unterteil (14) wechselweise in einer mechanischen Weise zwischen ihnen miteinander und auf dem zwischen ihnen eingefügten elastischen Element (18) oder (18') verbinden, wobei das mittlere Durchgangsloch (42) des unteren Körpers (14) von einer Umfangslippe (40) begrenzt wird, die auf einer ringförmigen Krone (38) ausgebildet ist, die sich auf der Oberseite des konvexen Teils (16) des Unterteils (14) befindet und um im Wesentlichen 90° nach unten gebogen ist.

2. Schwingungsdämpfende Halterung nach Anspruch 1, **dadurch gekennzeichnet, dass** die Buchse (23) am oberen Ende einen Gewindeabschnitt (25) mit einem kleineren Durchmesser gegenüber dem darunterliegenden zylindrischen Körper oder Schaft (27) derselben Buchse umfasst, die an dem entgegengesetzten unteren Ende eine integrale Platte (29) mit einem größeren Durchmesser gegenüber dem der Lippe (40) aufweist, die das mittlere Durchgangsloch (42) des unteren Körpers (14) definiert.

3. Schwingungsdämpfende Halterung nach den Ansprüchen 1 und 2, **dadurch gekennzeichnet, dass** die Buchse (23) von unten in das Loch (42) des Unterteils (14) eingesetzt ist, durch das Loch (19) des elastischen Elements (18') und das Loch (26) der Abdeckung (12) verläuft, aus ihm mit dem Gewindeabschnitt (25) herausragt, auf den eine Sechskantmutter (31) geschraubt ist, die die Verbindung zwischen der Buchse (23) und der Lippe herstellt und zugleich die Abdeckung, das elastische Element (18') und den unteren Körper (14) stabil mechanisch miteinander zusammenfügt.

4. Schwingungsdämpfende Halterung nach Anspruch 1, **dadurch gekennzeichnet, dass** die Buchse (24) mit einem oberen Endbund (30) versehen ist, während das entgegengesetzte untere Ende derselben Buchse (24) einen Abschnitt (34) mit einem kleineren Durchmesser definiert, der mit einem Außengewinde versehen ist und eine ringförmige Absenkung (24') bildet, wobei dieser Abschnitt (34) in das entsprechend gewindete mittlere Loch (52) des scheibenartigen Elements (50) geschraubt ist, das an der Umfangslippe (40) mit Einfügung einer Isolierscheibe (44) anliegt, wobei die Isolierscheibe (44) mit einem mittleren Loch (46) versehen ist, in dem eine Federscheibe (48) mit mittlerem Loch (48') angeordnet ist.

5. Modulare glockenförmige schwingungsdämpfende Halterung nach Anspruch 4, **dadurch gekennzeichnet, dass** die Buchse (24) aus dem scheibenartigen Element (50) mit ihrem unteren Teil herausragt, auf dem ein sich quer erstreckendes Durchgangsloch (56) zum Eintreiben eines Stifts (58) oder von etwas Gleichwertigem ausgebildet ist.

6. Schwingungsdämpfende Halterung nach Anspruch 3, **dadurch gekennzeichnet, dass** das elastische Element (18') eine im Wesentlichen kegelstumpfförmige Gestalt in der mittleren oberen Hälfte (21) aufweist, die in einer zu der Fläche, die von der Innenseite der Abdeckung (12) definiert wird, komplementären Weise geformt ist, während in der unteren Hälfte, die zwischen der Abdeckung und dem Unterteil (16) freiliegend bleibt, das elastische Element (18') ein konkaves Profilband (33) definiert.

7. Schwingungsdämpfende Halterung nach Anspruch 1, **dadurch gekennzeichnet, dass** der ebene Rahmen (20) längs des Umfangs und in der Nähe der kreisrunden oder schlitzförmigen Löcher (22) mit alphabetischen oder gegebenenfalls alphanumerischen Referenzen (39) versehen ist, die geeignet sind, so viele Kenncodes der elastischen Elemente (18), (18') zu definieren.

## Revendications

1. Un support modulaire amortisseur de vibrations en forme de cloche (10), (10'), comprenant:
- un corps supérieur ou couvercle circulaire-plan (12), intérieurement concave ;
- un corps inférieur ou base circulaire-plan (14) avec une surface extérieure conique convexe (16) et pourvu d'un cadre plat intégré (20) avec des trous (22) dont certains oblongs ;
- lesdits corps (12) et (14) étant respectivement pourvus d'un trou traversant central (26), (42),
- un élément élastique (18), (18') avec un trou traversant central (32) ou (19) ;
- et une bague (23) ou (24) avec trou axial (23') ou (36),
**caractérisé en ce que** ledit trou traversant central (26) du corps (12) définit une forme polygonale propre à venir en prise avec une couronne hexagonale (26') de la bague (24) ou avec une ou plusieurs facettes (35) de la bague (23), lesdites bagues connectant alternativement entre eux de manière mécanique le couvercle (12) et la base (14) l'un à l'autre et sur l'élément élastique (18) ou (18') interposé entre eux, le trou traversant central (42) du corps inférieur (14) étant délimité par une lèvre circonférentielle (40) formée sur une couronne annulaire (38) présente au sommet de la partie convexe (16) de la base (14) et repliée vers le bas, sensiblement à 90 °.

2. Le support amortisseur de vibrations selon la revendication 1, **caractérisé en ce que** ladite bague (23) comprend à l'extrémité supérieure une partie filetée (25) de diamètre inférieur à celui du corps ou de la tige cylindrique sous-jacent (27) de la même bague qui, à l'extrémité inférieure opposée, présente une plaque intégrée (29) ayant un diamètre supérieur à celui de la lèvre (40) définissant le trou traversant central (42) du corps inférieur (14).

3. Le support amortisseur de vibrations selon les revendications 1 et 2, **caractérisé en ce que** ladite bague (23) est insérée par le bas dans le trou (42) de la base (14), traverse le trou (19) de l'élément élastique (18') et le trou (26) du couvercle (12) faisant saillie de ce dernier avec la partie filetée (25) sur laquelle est vissé un écrou hexagonal (31) qui réalise le couplage entre la bague (23) et ledit couvercle et, en même temps, lie de manière mécaniquement stable le couvercle lui-même, l'élément élastique (18') et le corps inférieur (14) entre eux.

4. Le support amortisseur de vibrations selon la revendication 1, **caractérisé en ce que** ladite bague (24) est munie d'un collet d'extrémité supérieure (30), tandis que l'extrémité inférieure opposée de la même bague (24) définit une partie (34) d'un diamètre inférieur, pourvu d'un filetage extérieur et formant un rétrécissement annulaire (24'), ladite partie (34) étant vissée dans le trou central (52) taraudé de manière correspondante d'un élément en forme de disque (50) qui bute contre ladite lèvre circonférentielle (40) avec interposition d'une rondelle isolante (44), ladite rondelle isolante (44) étant munie d'un trou central (46) dans lequel est disposée une rondelle ressort (48) avec trou central (48').

5. Le support modulaire amortisseur de vibrations en forme de cloche selon la revendication 4, **caractérisé en ce que** la bague (24) fait saillie de l'élément en forme de disque (50) avec sa partie inférieure sur laquelle est formé un trou traversant (56) s'étendant transversalement pour l'insertion forcée d'une goupille (58) ou équivalent.

6. Le support amortisseur de vibrations selon la revendication 3, **caractérisé en ce que** l'élément élastique (18') présente une conformation sensiblement tronconique dans la demi-partie centrale-supérieure (21), conformée de manière complémentaire à la surface définie par la face interne du couvercle (12), tandis que dans la demi-partie inférieure qui reste exposée entre ledit couvercle et la base (16), ledit élément élastique (18') définit une bande (33) de profil concave.

7. Le support amortisseur de vibrations selon la revendication 1, **caractérisé en ce que** le cadre plat (20) est pourvu, le long de la périphérie et à proximité desdits trous circulaires ou oblongs (22), de références alphabétiques ou éventuellement alphanumériques (39), adaptées pour définir autant de codes d'identification des éléments élastiques (18), (18').
